# EUROPEAN PATENT APPLICATION

(11) **EP 4 773 313 A1**
(43) Date of publication of application: **08.07.2026**
(21) Application number: 24869969.6
(22) Date of filing: 09.07.2024
(51) Int. Cl.: H01M 10/058, H01M 10/0525, H01M 10/0567, H01M 10/42, H01M 4/136, H01M 4/133

(54) **BATTERY AND ENERGY STORAGE DEVICE**

(30) Priority: 25.09.2023 CN 202311243633
(71) Applicant: Xiamen Hithium Energy Storage Technology Co., Ltd., Xiamen, Fujian 361100 (CN)
(72) Inventor: JIA, Shize, Xiamen, Fujian 361100 (CN); WANG, Qichao, Xiamen, Fujian 361100 (CN)
(74) Representative: Manitz Finsterwald Patent- und Rechtsanwaltspartnerschaft mbB
(86) International application number: PCT/CN2024/104425
(87) International publication number: WO 2025/066413

(57) **Abstract**

Provided are a battery and an energy storage device. The battery includes: a positive electrode plate, a negative electrode plate, a separator, and an electrolyte solution. The positive electrode plate includes a positive current collector and a positive active material layer. The negative electrode plate includes a negative current collector and a negative active material layer. The electrolyte solution includes an electrolyte, a solvent, and an additive. A ratio of a weight of the negative active material layer per unit area to a weight of the positive active material layer per unit area is z, and z ranges from 0.46 to 0.55. The additive includes additive A, and the additive A is a substance containing an oxalic acid structure.

## Description

### CROSS-REFERENCE TO RELATED APPLICATION

This application is based on and claims priority to Chinese Patent Application No. 202311243633.0 filed on September 25, 2023, the entire contents of which are incorporated herein by reference.

### FIELD

The present disclosure relates to the field of battery technologies, and more particularly, to a battery and an energy storage device.

### BACKGROUND

With the development of the energy storage industry, battery (such as lithium-ion battery) technologies have been continuously advancing, and application scenarios such as wind and solar power generation sides have put forward requirements for longer service life of batteries.

Taking lithium-ion batteries as an example, in a chemical system of the battery, as cycling progresses, a main cause of battery life degradation is the reaction of lithium ions on a surface of the negative electrode, causing lithium in the battery system to exist on the surface of the negative electrode in the form of organic compounds or inorganic layers. Consequently, lithium in the active material is consumed, leading to the battery capacity fading.

The consumption of lithium is mainly due to two factors. On the one hand, during a charging process, the negative electrode has the low potential, which makes the electrolyte solution highly prone to reduction on the surface of the negative electrode under this low potential, producing lithium-containing organic and inorganic substances. Therefore, the electrolyte solution forms a solid electrolyte interphase (SEI) layer at the negative electrode interface, consuming lithium in the active material. On the other hand, during a charging and discharging cycling process, the graphite negative electrode undergoes lithium intercalation and deintercalation, causing the layered graphite structure to constantly undergo expansion and contraction of the interlayer spacing. During this process, the SEI protective layer previously formed at the electrolyte solution-negative electrode interface is constantly stretched, continuously exposing new graphite interface that comes into direct contact with the electrolyte solution. The electrolyte solution reacts continuously at the graphite interface, which consumes active lithium, resulting in the loss of active lithium.

### SUMMARY

The present disclosure aims to solve at least one of the technical problems in the related art. Therefore, an objective of the present disclosure is to provide a battery. By optimizing a ratio of a positive electrode to a negative electrode and adjusting an electrolyte solution accordingly, the battery can reduce a risk of SEI layer cracking and loss of active substances (such as active lithium) during cycling, which can further mitigate capacity fading in a cycling process, endowing the battery with good cycle performance and thus a longer service life.

The present disclosure further provides an energy storage device including the above-described battery.

In a first aspect, a battery according to embodiments of the present disclosure includes: a positive electrode plate, the positive electrode plate including a positive current collector and a positive active material layer coated on the positive current collector; a negative electrode plate, the negative electrode plate including a negative current collector and a negative active material layer coated on the negative current collector; a separator located between the positive electrode plate and the negative electrode plate; and an electrolyte solution, the electrolyte solution including an electrolyte, a solvent, and an additive. A ratio of a weight of the negative active material layer per unit area to a weight of the positive active material layer per unit area is *z. z* ranges from 0.46 to 0.55. The additive includes additive A. The additive A is a substance containing an oxalic acid structure.

With the battery according to the embodiments of the present disclosure, by increasing the ratio of the negative active material layer to the positive active material layer, the negative electrode of the battery exhibits reduced expansion during cycling, and the stretching of the SEI layer at a negative electrode interface is minimized, which makes it difficult for the negative active material layer to be exposed to the electrolyte solution, preventing direct contact between the negative active material layer and the electrolyte solution. In this way, a reduction reaction of the electrolyte solution is reduced, minimizing loss of active lithium on the negative electrode surface. In addition, by adding additive A containing the oxalic acid structure to the electrolyte solution, the risk of SEI layer cracking caused by oxidation during a battery's full charging and full discharging process is reduced, which can decrease the loss of active lithium caused by direct contact and reaction between the negative active material layer and the electrolyte solution, minimizing the loss of active lithium on the negative electrode surface. In this way, by optimizing a ratio of a positive electrode to a negative electrode and adjusting the electrolyte solution accordingly, the battery can reduce the risk of SEI layer cracking and loss of active substances (such as active lithium) during cycling, which can further mitigate capacity fading in a cycling process, endowing the battery with good cycle performance and thus a longer service life.

According to some embodiments of the present disclosure, a mass percentage content of the additive A in the electrolyte solution is *a*. *a* ranges from 0.1% to 1%.

According to some embodiments of the present disclosure, the additive A includes at least one of lithium bis(oxalato)borate or lithium difluoro(oxalato)borate.

According to some embodiments of the present disclosure, the solvent includes solvent B. The solvent B is a carboxylic acid ester solvent.

According to some optional embodiments of the present disclosure, a mass percentage content of the solvent B in the electrolyte solution is *b*. *b* ranges from 1% to 30%.

In another exemplary embodiment of the present disclosure, *b* ranges from 5% to 15%.

According to some optional embodiments of the present disclosure, the solvent B includes at least one of methyl acetate, methyl propionate, ethyl acetate, ethyl propionate, propyl methanoate, propyl acetate, or propyl propionate.

According to some optional embodiments of the present disclosure, the additive includes additive C. The additive C is a nitrogen-containing heterocyclic substance.

According to some optional embodiments of the present disclosure, a mass percentage content of the additive C in the electrolyte solution is *c*. *c* ranges from 0.1% to 0.5%.

According to some optional embodiments of the present disclosure, the additive C includes at least one of 2-fluoropyrazine, 2,5-difluoropyrazine, 2-fluoropyridazine, 3-fluoropyridazine, 2-fluoropyridine, 3-fluoropyridine, 4-fluoropyridine, 2,3-fluoropyridine, or 3,4-fluoropyridine.

According to some optional embodiments of the present disclosure, the mass percentage content of the additive A in the electrolyte solution is *a*; the mass percentage content of the solvent B in the electrolyte solution is *b*; and the mass percentage content of the additive C in the electrolyte solution is *c*. *z*, *a*, *b*, and c satisfy: 0.25 ≤ (*a*+*c*)*(1-*b*)*100/*z* ≤ 2.15.

In a second aspect, an energy storage device according to embodiments of the present disclosure includes the battery according to the embodiments of the present disclosure in the first aspect.

With the energy storage device according to the embodiments of the present disclosure, by configuring the above-described battery, the battery can reduce a risk of SEI layer cracking and loss of active substances (such as active lithium) during cycling, which can further mitigate capacity fading in a cycling process, endowing the battery with good cycle performance and thus a longer service life.

Additional aspects and advantages of the present disclosure will be provided in part in the following description, or will become apparent in part from the following description, or can be learned from practicing of the present disclosure.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present disclosure.

The following describes a battery according to embodiments of the present disclosure. In the embodiments of the present disclosure, the battery may be a lithium-ion battery, a sodium-ion battery, etc.

In a first aspect, a battery according to embodiments of the present disclosure includes: a positive electrode plate, a negative electrode plate, a separator, and an electrolyte solution. The separator is located between the positive electrode plate and the negative electrode plate.

The positive electrode plate includes a positive current collector and a positive active material layer coated on the positive current collector, and the negative electrode plate includes a negative current collector and a negative active material layer coated on the negative current collector. For example, the positive current collector may be aluminum foil, and the negative current collector may be copper foil. Taking the battery being the lithium-ion battery as an example, the positive active material layer may include lithium iron phosphate, and the negative active material layer may include graphite. The electrolyte solution includes an electrolyte, a solvent, and an additive. The solvent may include esters solvent. Taking the battery being the lithium-ion battery as an example, the electrolyte may include lithium salts.

A ratio of a weight of the negative active material layer per unit area to a weight of the positive active material layer per unit area is *z*, and *z* ranges from 0.46 to 0.55. For example, z may be 0.46, 0.47, 0.48, 0.49, 0.50, 0.51, 0.52, 0.53, 0.54, 0.55, etc. By setting the ratio of the weight of the negative active material layer per unit area to the weight of the positive active material layer per unit area within the range of 0.46 to 0.55, this method relatively increases the ratio of the weight of the negative active material layer per unit area to the weight of the positive active material layer per unit area, in such a manner that a negative electrode of the battery exhibits reduced expansion during cycling, and a stretching of a SEI layer at a negative electrode interface is minimized. Therefore, the negative active material layer is difficult to be exposed to the electrolyte solution, which prevents direct contact between the negative active material layer and the electrolyte solution, reducing a reduction reaction of the electrolyte solution. In this way, loss of active lithium on the negative electrode surface is minimized.

The battery according to the embodiments of the present disclosure is described below by taking the battery being the lithium-ion battery as an example.

When the ratio z of the weight of the negative active material layer per unit area to the weight of the positive active material layer per unit area is low, there are too few sites in the graphite of the negative electrode where lithium can be intercalated. During a battery charging process, lithium plating may occur, and plated lithium metal reacts with the electrolyte solution, leading to gas production and further exacerbating consumption of active lithium. In addition, since a ratio of lithium intercalated into the graphite to the graphite is high, during a deintercalation and intercalation process of lithium from the graphite of the cycling, a layered graphite structure undergoes expansion and contraction of interlayer spacing, which leads to substantial expansion of the graphite and significant stretching of the SEI layer at the negative electrode interface, making the SEI layer at the negative electrode interface prone to being stretched and damaged. Therefore, new graphite interface is continuously exposed and comes into direct contact with the electrolyte solution, and the electrolyte solution reacts continuously at the graphite interface, which consumes active lithium, resulting in the loss of active lithium.

Since the battery in the embodiments of the present disclosure increases the ratio of the weight of the negative active material layer per unit area to the weight of the positive active material layer per unit area, there are relatively more sites available for lithium intercalation in the graphite of the negative active material layer, which can reduce or avoid lithium plating that may occur during the battery charging process. In addition, with a fixed amount of active lithium, the ratio of lithium intercalated in the graphite to the graphite decreases, in such a manner that during the deintercalation and intercalation process of lithium from the graphite of the cycling, the layered graphite structure undergoes the expansion and contraction of the interlayer spacing, which leads to reduced expansion of the graphite and minimized stretching of the SEI layer at the negative electrode interface. Therefore, the graphite of the negative electrode is difficult to be exposed to the electrolyte, which prevents the direct contact between the graphite of the negative electrode and the electrolyte solution, reducing the reduction reaction of the electrolyte solution. In this way, loss of active lithium on the negative electrode surface is minimized.

Increasing the ratio z of the weight of the negative active material layer per unit area to the weight of the positive active material layer per unit area results in reduced expansion of the graphite and minimized stretching of the SEI layer at the negative electrode interface, which makes it difficult for the graphite of the negative electrode to be exposed to the electrolyte solution, preventing the direct contact between the graphite of the negative electrode and the electrolyte solution. In this way, the reduction reaction of the electrolyte solution is reduced, minimizing the loss of active lithium on the negative electrode surface. However, when the ratio z of the weight of the negative active material layer per unit area to the weight of the positive active material layer per unit area is relatively large, on the one hand, a graphite utilization rate of the negative electrode is reduced, on the other hand, in a fully discharged state of the battery, potential of the negative electrode is relatively higher, which is likely to reach oxidation potential of the SEI layer. In this way, the SEI layer is cracked during full charging and full discharging, which leads to direct contact between the graphite and components such as the solvent of the electrolyte solution, resulting in gas generation due to reaction. Therefore, the ratio of the weight of the negative active material layer per unit area to the weight of the positive active material layer per unit area is set within 0.46 to 0.55, reducing the risk of SEI layer cracking overall.

To better mitigate the risk of SEI layer cracking during full charging and full discharging of the battery, additive A is added to the electrolyte solution. That is, the additive in the embodiments of the present disclosure includes the additive A, which is a substance containing an oxalic acid structure. The additive A exhibits a higher reduction potential at the negative electrode. In the fully discharged state of the battery, the battery potential is difficult to reach the oxidation potential of the formed SEI layer, which can reduce the risk of SEI layer cracking caused by oxidation and improve the gas generation problem due to oxidation of the SEI layer during storage of the battery in the fully discharged state.

It should be understood that, full discharge of the battery refers to discharging the battery to a lower cutoff voltage, while full charge of the battery refers to charging the battery to an upper cutoff voltage.

In another exemplary embodiment of the present disclosure, the additive A includes at least one of lithium bis(oxalato)borate (LiBOB) or lithium difluoro(oxalato)borate (LiDFOB). For example, the additive A includes lithium bis(oxalato)borate, or the additive A includes lithium difluoro(oxalato)borate, or the additive A includes both lithium bis(oxalato)borate and lithium difluoro(oxalato)borate.

With the battery according to the embodiments of the present disclosure, by increasing the ratio of the negative active material layer to the positive active material layer, the negative electrode of the battery exhibits reduced expansion during cycling, and the stretching of the SEI layer at the negative electrode interface is minimized , which makes it difficult for the negative active material layer to be exposed to the electrolyte solution, preventing the direct contact between the negative active material layer and the electrolyte solution. In this way, the reduction reaction of the electrolyte solution is reduced, minimizing the loss of active lithium on the negative electrode surface. In addition, by adding the additive A containing the oxalic acid structure to the electrolyte solution, the risk of SEI layer cracking caused by oxidation during a battery's full charging and full discharging process is reduced, which can decrease the loss of active lithium caused by direct contact and reaction between the negative active material layer and the electrolyte solution, minimizing the loss of active lithium on the negative electrode surface. In this way, by optimizing a ratio of a positive electrode to a negative electrode and adjusting the electrolyte solution accordingly, the risk of SEI layer cracking and loss of active substances (such as active lithium) can be reduced during the cycling of the battery, which can further mitigate capacity fading in a cycling process, endowing the battery with good cycle performance and thus a low lifetime degradation rate and a longer service life.

According to some embodiments of the present disclosure, a mass percentage content of the additive A in the electrolyte solution is *a,* and *a* ranges from 0.1% to 1%. For example, a may be 0.1%, 0.2%, 0.3%, 0.4%, 0.5%, 0.6%, 0.7%, 0.8%, 0.9%, 1%, etc. If the amount of the additive A is too small, the risk of SEI layer cracking caused by oxidation cannot be effectively reduced. If the amount of additive A is too large, since the additive A also participates in SEI film formation, density of the SEI layer is increased, leading to higher battery impedance and lower energy efficiency. Therefore, the amount of the additive A should not be excessive. By setting the mass percentage content of the additive A in the electrolyte solution within the range of 0.1% to 1%, the risk of SEI layer cracking caused by oxidation can be effectively reduced, while ensuring that the battery maintains overall lower impedance and higher energy efficiency.

According to some embodiments of the present disclosure, the solvent includes solvent B, which is a carboxylic acid ester solvent. As described above, adding the additive A to the electrolyte solution can effectively reduce the risk of SEI layer cracking caused by oxidation. However, participation of the additive A in the SEI film formation leads to higher battery impedance. On the basis of adding the additive A to the electrolyte solution, the carboxylic acid ester is further added to the electrolyte solution. That is, the solvent in this embodiment includes the solvent B, which is the carboxylic acid ester solvent. Carboxylic acid esters have advantages of high dielectric constant and low viscosity, allowing lithium ions to transport more quickly in material pores within the battery. In this way, battery impedance can be significantly reduced, which results in lower overall battery impedance and higher energy efficiency. On the basis of adding the additive A to the electrolyte solution, the solvent includes the carboxylic acid ester solvent, which can reduce the risk of SEI layer cracking while enabling lower overall battery impedance and higher energy efficiency of the battery.

In another exemplary embodiment of the present disclosure, the solvent B includes at least one of methyl acetate, methyl propionate, ethyl acetate, ethyl propionate, propyl methanoate, propyl acetate, or propyl propionate. For example, the solvent B includes one of methyl acetate, methyl propionate, ethyl acetate, ethyl propionate, propyl methanoate, propyl acetate, or propyl propionate; or the solvent B includes more of methyl acetate, methyl propionate, ethyl acetate, ethyl propionate, propyl methanoate, propyl acetate, and propyl propionate.

It should be noted that the "more" in the present disclosure refers to two or more.

According to some optional embodiments of the present disclosure, a mass percentage content of the solvent B in the electrolyte solution is *b*, and *b* ranges from 1% to 30%. For example, *b* may be 1%, 3%, 5%, 7%, 10%, 12%, 15%, 18%, 20%, 23%, 25%, 28%, 30%, etc. If the amount of solvent B is too small, the overall impedance of the battery remains higher. If the amount of solvent B is too large, the carboxylic acid ester is prone to oxidation at the high potential of the positive electrode, triggering unnecessary side reactions and gas generation, which not only impairs stability of the positive electrode but also damages the battery interface. Therefore, the amount of solvent B should not be excessive. By setting the mass percentage content of the solvent B in the electrolyte solution within the range of 1% to 30%, the battery can achieve lower impedance, and the unnecessary side reactions and gas generation caused by the oxidation of the carboxylic acid ester can be reduced, avoiding damage to the stability of the positive electrode.

In another exemplary embodiment of the present disclosure, *b* ranges from 5% to 15%. For example, *b* may be 5%, 6%, 7%, 8%, 9%, 10%, 11%, 12%, 13%, 14%, 15%, etc. By setting the mass percentage content of the solvent B in the electrolyte solution within the range of 5% to 15%, the content of solvent B can be further optimized, improving overall performance of the battery.

According to some optional embodiments of the present disclosure, the additive includes additive C, which is a nitrogen-containing heterocyclic substance. As described above, the solvent is configured to include the carboxylic acid ester solvent to reduce the battery impedance. However, the carboxylic acid ester is prone to oxidation at the high potential of the positive electrode, triggering unnecessary side reactions and gas generation, which not only impairs stability of the positive electrode but also damages the battery interface. On the basis of introducing the carboxylic acid ester solvent into the electrolyte solution, the additive B, which is nitrogen-containing heterocyclic, is further added to the electrolyte solution. This nitrogen-containing heterocycle can undergo oxidative polymerization at the positive electrode, in such a manner that a dense CEI (cathode solid electrolyte interface) layer is polymerized and grown at a positive electrode interface, which can effectively inhibit direct contact between the carboxylic acid ester and the positive active material layer, suppressing oxidation of the carboxylic acid ester at the positive electrode. In this way, while reducing the risk of SEI layer cracking, lower overall battery impedance and higher energy efficiency can be achieved. Also, an impact on the stability of the positive electrode is reduced, and overall performance of the battery is improved.

In another exemplary embodiment of the present disclosure, the additive C includes at least one of 2-fluoropyrazine, 2,5-difluoropyrazine, 2-fluoropyridazine, 3-fluoropyridazine, 2-fluoropyridine, 3-fluoropyridine, 4-fluoropyridine, 2,3-fluoropyridine, or 3,4-fluoropyridine. For example, the additive C includes one of 2-fluoropyrazine, 2,5-difluoropyrazine, 2-fluoropyridazine, 3-fluoropyridazine, 2-fluoropyridine, 3-fluoropyridine, 4-fluoropyridine, 2,3-fluoropyridine, or 3,4-fluoropyridine, or the additive C includes more of 2-fluoropyrazine, 2,5-difluoropyrazine, 2-fluoropyridazine, 3-fluoropyridazine, 2-fluoropyridine, 3-fluoropyridine, 4-fluoropyridine, 2,3-fluoropyridine, or 3,4-fluoropyridine.

According to some optional embodiments of the present disclosure, a mass percentage content of the additive C in the electrolyte solution is c, and c ranges from 0.1% to 0.5%. For example, c may be 0.1%, 0.15%, 0.2%, 0.25%, 0.3%, 0.35%, 0.4%, 0.45%, 0.5%, etc. If the amount of additive C is too small, the dense CEI layer is unable to be polymerized and grown at the positive electrode interface, failing to effectively inhibit the oxidation of carboxylic acid ester at the positive electrode caused by direct contact between the carboxylic acid ester and the positive active material layer. If the amount of additive C is too large, a thickness of the dense CEI layer polymerized and grown at the positive electrode interface is larger, which increases the impedance to a certain extent. Based on this, by setting the mass percentage content of the additive C in the electrolyte solution within the range of 0.1% to 0.5%, the dense CEI layer can be polymerized and grown at the positive electrode interface, in such a manner that the direct contact between the carboxylic acid ester and the positive active material layer can be effectively inhibited, suppressing the oxidation of carboxylic acid ester at the positive electrode. In addition, lower battery impedance can be achieved.

According to some optional embodiments of the present disclosure, the mass percentage content of the additive A in the electrolyte solution is *a,* the mass percentage content of the solvent B in the electrolyte solution is *b*, and the mass percentage content of the additive C in the electrolyte solution is *c*. *z*, *a*, *b*, and *c* satisfy: 0.25 ≤ (*a*+*c*)*(1-*b*)*100/*z* ≤ 2.15. For example, (*a*+*c*)*(1-*b*)*100/*z* may be 0.25, 0.40, 0.55, 0.70, 0.85, 1.0, 1.15, 1.30, 1.45, 1.60, 1.75, 1.90, 2.05, 2.15, etc. When (*a*+*c*)*(1-*b*)*100/*z* is less than 0.25, the SEI film of the battery may undergo oxidative cracking during storage in the fully discharged state. In addition, after the SEI film cracks, the solvent in the electrolyte solution is prone to react with the exposed negative electrode active material, resulting in gas generation. When (*a*+*c*)*(1-*b*)*100/*z* is greater than 2.15, the battery impedance is higher, and lithium plating is more likely to occur, leading to accelerated cycle fading and increased impedance.

By ensuring that the ratio z of the weight of the negative active material layer per unit area to the weight of the positive active material layer per unit area, the mass percentage content *a* of the additive A in the electrolyte solution, the mass percentage content *b* of the solvent B in the electrolyte solution, and the mass percentage content c of the additive C in the electrolyte solution satisfy: 0.25 ≤ (*a*+*c*)*(1-*b*)*100/*z* ≤ 2.15, the ratio of the positive electrode to the negative electrode and the adjustment of the electrolyte solution can be further optimized. Therefore, the stretching of the SEI layer at the negative electrode interface can be reduced, the risk of SEI layer cracking caused by oxidation can be decreased, and the gas generation problem due to oxidation of the SEI layer during storage of the battery in the fully discharged state can be improved, which reduces the risk of SEI layer cracking overall, resulting in less loss of active lithium on the negative electrode surface. In addition, the battery exhibits lower impedance and higher energy efficiency.

An energy storage device according to embodiments of the present disclosure in a second aspect includes the battery according to the above-described embodiments of the present disclosure in the first aspect.

With the energy storage device according to the embodiments of the present disclosure, by configuring the above-described battery, the battery can reduce a risk of SEI layer cracking and loss of active substances (such as active lithium) during cycling, which can further mitigate capacity fading in a cycling process, endowing the battery with good cycle performance and thus a longer service life.

The battery according to the embodiments of the present disclosure will be further described below with reference to Comparative Examples 1 to 3 and Examples 1 to 19. In the following Comparative Examples and Examples, the battery is the lithium-ion batteries.

### I. Preparation of the Lithium-ion Battery:

The preparation of the lithium-ion battery includes preparation of the positive electrode plate, preparation of the negative electrode plate, preparation of the electrolyte solution, and preparation of the separator.

Preparation of the positive electrode plate: The positive electrode active material lithium iron phosphate, conductive carbon black SP, and binder PVDF were dispersed in the solvent NMP at a mass ratio of 97:0.7:2.3 and mixed evenly to obtain a positive electrode slurry. The positive electrode slurry was coated onto the positive current collector (e.g., aluminum foil), followed by drying, cold pressing, slitting, and cutting to obtain the positive electrode plate (the positive active material layer was formed by curing the positive electrode slurry).

Preparation of the negative electrode plate: The negative electrode active material artificial graphite, conductive carbon SP, thickener CMC, and binder SBR were dispersed in deionized water at a mass ratio of 96.5:0.5:1:2 and mixed evenly to obtain a negative electrode slurry. The negative electrode slurry was coated onto the negative current collector. (e.g., copper foil), followed by drying, cold pressing, slitting, and cutting to obtain the negative electrode plate (the negative active material layer is formed by curing the negative electrode slurry).

Preparation of the Electrolyte Solution: In an argon-filled glove box with a moisture content ≤1ppm, ethylene carbonate, dimethyl carbonate, and ethyl methyl carbonate were mixed at a mass ratio of 1:1:1. Then, dried lithium hexafluorophosphate as electrolyte was dissolved in the mixed solvent and stirred until completely dissolved and homogeneous. Fluoroethylene carbonate was added and mixed evenly to obtain the electrolyte solution.

Preparation of the Separator: A polyethylene film with a thickness of 16µm was used as the separator.

The positive electrode plate, separator, and negative electrode plate prepared above were stacked in sequence, with the separator located between the positive electrode and the negative electrode to separate them. After winding, a bare cell was obtained. After welding the tabs, the cell was assembled into an outer package. After injecting the prepared electrolyte solution, the cell was subjected to encapsulation, standing, formation, shaping, capacity testing, and other processes, to finally prepare and obtain the lithium-ion battery.

### II. Performance Testing

The lithium-ion battery prepared above was subjected to the following tests:

### 1) Cycle Performance Test

The battery was subjected to charge-discharge cycle testing on a charge-discharge tester at a test temperature of 25°C and a cycle rate of 1C (i.e., both the charging rate and the discharging rate were 1C), with a charge-discharge voltage range of 2.5V to 3.65V. The capacity retention rate after cycling was calculated. The formula for calculating the capacity retention rate at 25°C is: Capacity retention rate after the n-th cycle = (Discharge capacity after the n-th cycle / Discharge capacity of the first cycle) * 100%.

### 2) 50% SOC Direct Current Resistance (DCR) Test

The battery was placed in a constant temperature chamber at 25°C, discharged to a voltage of 2.5V at a constant current of 0.5C, and allowed to stand for 5 minutes. Then, it was charged to a voltage of 3.65V at a constant current of 0.5C, followed by constant voltage charging until the current dropped to 0.025C. After standing for another 5 minutes, the battery was discharged to 2.5V at a constant current of 0.1C, and the discharge capacity at this time was recorded as C1. Subsequently, the battery was charged to 3.65V at a constant current of 0.5C, followed by constant voltage charging until the current dropped to 0.025C. After standing for another 5 minutes, the battery was discharged at a constant current of 0.1C1 for 5 hours, and the voltage at this time was recorded as V1. Next, the battery was discharged at a constant current of 1C for 30 seconds, and the voltage at this time was recorded as V2. The direct current resistance (DCR) of the battery at 50% SOC was calculated as: (V1-V2)/C1.

### 3) Battery Swelling Rate After 30 Days of Storage at 60°C in the Fully Discharged State

The battery was tested on a charge-discharge tester at 25°C, cycled 3 times at a rate of 1C (i.e., both the charging rate and discharging rate were 1C), and the discharge capacity of the third cycle was recorded as C1. Then, the battery was discharged to 2.5V at a constant current of 0.5C1, and the thickness of the lithium-ion battery was measured and recorded as d1. Subsequently, the battery was stored at 60°C for 30 days, and the thickness was monitored and recorded as d2. The swelling rate of the battery thickness after 30 days of storage at 60°C was calculated as (d2-d1)/d1×100%.

The parameters and test data of Comparative Examples 1 to 3 and Examples 1 to 19 are shown in Table 1 below.

**Table 1**

| **Serial Number** | **z** | **Additive A** | | **Solvent B** | | **Additive C** | | **(a+c)*( 1-b)*100 /z** | **Capacity retention rate after 1000 cycles at 25°C** | **Battery Swelling Rate of Storage at 60°C and 2.5V** | **DCR (mΩ)** |
|---|---|---|---|---|---|---|---|---|---|---|---|
| | | **Type** | **Conte nt** | **Type** | **Cont ent** | **Type** | **Conte nt** | | | | |
| **Comparative Example 1** | **0.44** | **\** | **\** | **\** | **\** | **\** | **\** | **\** | **52.10%** | **38.90%** | **35** |
| **Comparative Example 2** | **0.58** | **\** | **\** | **\** | **\** | **\** | **\** | **\** | **72.80%** | **34.90%** | **39** |
| **Comparative Example·3** | **0.46** | **\** | **\** | **\** | **\** | **\** | **\** | **\** | **69.10%** | **27.80%** | **38** |
| **Example 1** | **0.46** | **LiBOB** | **0.30%** | **\** | **\** | **\** | **\** | **\** | **78.30%** | **16.50%** | **43** |
| **Example 2** | **0.48** | **LiBOB** | **0.30%** | **\** | **\** | **\** | **\** | **\** | **81.40%** | **17.30%** | **44** |
| **Example·3** | **0.5** | **LiBOB** | **0.30%** | **\** | **\** | **\** | **\** | **\** | **83.70%** | **20.70%** | **46** |
| **Example 4** | **0.55** | **LiBOB** | **0.30%** | **\** | **\** | **\** | **\** | **\** | **84.10%** | **23.30%** | **47** |
| **Example 5** | **0.48** | **LiDFOB** | **0.10%** | **\** | **\** | **\** | **\** | **\** | **82.10%** | **22.50%** | **41** |
| **Example 6** | **0.48** | **LiDFOB** | **0.30%** | **\** | **\** | **\** | **\** | **\** | **83.40%** | **19.40%** | **44** |
| **Example 7** | **0.48** | **LiDFOB** | **0.50%** | **\** | **\** | **\** | **\** | **\** | **83.80%** | **17.90%** | **47** |
| **Example 8** | **0.48** | **LiDFOB** | **1.00%** | **\** | **\** | **\** | **\** | **\** | **81.90%** | **15.20%** | **53** |
| **Example 9** | **0.48** | **LiDFOB** | **0.30%** | **Ethyl acetate** | **1%** | **\** | **\** | **\** | **83.50%** | **19.50%** | **43** |
| **Example 10** | **0.48** | **LiDFOB** | **0.30%** | **Ethyl acetate** | **5%** | **\** | **\** | **\** | **82.80%** | **20.10%** | **40** |
| **Example 11** | **0.48** | **LiDFOB** | **0.30%** | **Ethyl acetate** | **15%** | **2,5-difluoropyrazi ne** | **0.10%** | **0.71** | **83.40%** | **18.90%** | ***36*** |
| **Example 12** | **0.48** | **LiDFOB** | **0.30%** | **Ethyl acetate** | **30%** | **2,5-difluoropyrazi ne** | **0.30%** | **0.88** | **83.30%** | **18.00%** | **35** |
| **Example 13** | **0.48** | **LiDFOB** | **0.30%** | **Propyl propionate** | **5%** | **2,5-difluoropyrazi ne** | **0.50%** | **1.58** | **84.60%** | **16.40%** | **43** |
| **Example 14** | **0.48** | **LiDFOB** | **0.30%** | **Propyl propionate** | **15%** | **2-fluoropyridine** | **0.10%** | **0.71** | **84.40%** | **16.60%** | **39** |
| **Example 15** | **0.48** | **LiDFOB** | **0.30%** | **Propyl propionate** | **15%** | **2-fluoropyridine** | **0.30%** | **1.06** | **86.80%** | **14.20%** | **37** |
| **Example 16** | **0.55** | **LiDFOB** | **0.10%** | **Ethyl acetate** | **30%** | **2-fluoropyridine** | **0.10%** | **0.25** | **81.70%** | **23.70%** | **42** |
| **Example 17** | **0.55** | **LiDFOB** | **0.10%** | **Ethyl acetate** | **30%** | **fluoropyridine** | **0.05%** | **0.19** | **78.1%** | **27.30%** | **40** |
| **Example 18** | **0.48** | **LiDFOB** | **0.60%** | **Ethyl acetate** | **6%** | **2-fluoropyridine** | **0.50%** | **2.15** | **84.90%** | **15.70%** | **45** |
| **Example 19** | **0.48** | **LiDFOB** | **0.60%** | **Ethyl acetate** | **1%** | **2-fluoropyridine** | **0.50%** | **2.28** | **76.2%** | **17.10%** | **49** |

It can be seen from Table 1 above that the additive A, the solvent B, and the additive C were not added to the electrolyte solutions of Comparative Examples 1 to 3. Consequently, their capacity retention rates after 1000 cycles at 25°C were all relatively low, while the battery swelling rates after storage at 2.5V and 60°C were all relatively high. In Examples 1 to 19, either the additive A was added to the electrolyte solution, or the additive A and the solvent B were added to the electrolyte solution, or the additive A, the solvent B, and the additive C were added to the electrolyte solution. Consequently, all of the batteries in Examples 1 to 19 exhibited relatively high capacity retention rates after 1000 cycles at 25°C and relatively low battery swelling rates after storage at 2.5V and 60°C. In addition, each of z in Examples 1 to 19 was in the range of 0.46 to 0.55. When z was lower than 0.46, the capacity retention rate after 1000 cycles at 25°C was lower and the battery swelling rate after storage at 2.5V and 60°C was higher; and when the z was higher than 0.55, the battery swelling rate after storage at 2.5V and 60°C was higher. Therefore, it can be seen that the batteries in the Examples of the present disclosure exhibited better cycle performance, and the battery impedance was also at a lower level.

It can be seen from Table 1 above that compared with Comparative Examples 1 to 3, where the additive A, the solvent B, or the additive C were not added to the electrolyte solutions, for all of Examples 1 to 8, the additive A was added in the electrolyte solutions. Consequently, their capacity retention rates after 1000 cycles at 25°C were significantly improved, and the battery swelling rates after storage at 2.5V and 60°C were significantly reduced. Therefore, it can be seen that when z was in the range of 0.46 to 0.55, introducing the additive A into the electrolyte solution can effectively improve the cycle performance of the battery and reduce the swelling rate.

It can be seen from Table 1 above that compared with Examples 1 to 8, where only the additive A was added to the electrolyte solutions, Example 9 and Example 10 further incorporated the solvent B into the electrolyte solutions on the basis of adding the additive A, reducing the battery impedance while maintaining a higher capacity retention rate after 1000 cycles at 25°C and a lower battery swelling rate after storage at 2.5V and 60°C.

It can be seen from Table 1 above that in Examples 11 to 19, compared with the case where (*a*+*c*)*(1-*b*)*100/*z* was less than 0.25 or greater than 2.15, when (*a*+*c*)*(1-*b*)*100/*z* was in the range of 0.25 to 2.15, the capacity retention rate after 1000 cycles at 25°C was higher and the battery swelling rate after storage at 2.5V and 60°C was lower. In addition, it can also be seen from the data of Examples 11 to 19 that compared with the case where (*a*+*c*)*(1-*b*)*100/*z* was in the range of 0.25 to 2.15, when (*a*+*c*)*(1-*b*)*100/*z* was less than 0.25 (e.g., Example 17 in Table 1), the battery swelling rate after storage at 2.5V and 60°C was significantly higher, while the capacity retention rate after 1000 cycles at 25°C was still acceptable, with a slight decrease. In addition, compared with the case where (*a*+*c*)*(1-*b*)*100/*z* was in the range of 0.25 to 2.15, when (*a*+*c*)*(1-*b*)*100/*z* was greater than 2.15 (e.g., Example 19 in Table 1), the battery impedance was higher. If the impedance was too high, it may cause lithium plating, affecting the cycle performance.

Reference throughout this specification to "an embodiment", "some embodiments", "exemplary embodiments", "an example", "a specific example", or "some examples" means that a particular feature, structure, material, or characteristic described in connection with the embodiment or example is included in at least one embodiment or example of the present disclosure. In this specification, exemplary descriptions of aforesaid terms are not necessarily referring to the same embodiment or example. Further, the particular features, structures, materials, or characteristics may be combined in any suitable manner in one or more embodiments or examples.

Although embodiments of the present disclosure have been illustrated and described, it is conceivable for those of ordinary skill in the art that various changes, modifications, replacements, and variations can be made to these embodiments without departing from the principles and spirit of the present disclosure. The scope of the present disclosure shall be defined by the claims as appended and their equivalents.

## Claims

1. A battery, comprising:
a positive electrode plate, wherein the positive electrode plate comprises a positive current collector and a positive active material layer coated on the positive current collector;
a negative electrode plate, wherein the negative electrode plate comprises a negative current collector and a negative active material layer coated on the negative current collector;
a separator located between the positive electrode plate and the negative electrode plate; and
an electrolyte solution, wherein the electrolyte solution comprises an electrolyte, a solvent, and an additive, wherein:
a ratio of a weight of the negative active material layer per unit area to a weight of the positive active material layer per unit area is *z*, *z* ranging from 0.46 to 0.55; and
the additive comprises additive A, the additive A being a substance containing an oxalic acid structure.

2. The battery according to claim 1, wherein a mass percentage content of the additive A in the electrolyte solution is *a*, *a* ranging from 0.1% to 1%.

3. The battery according to claim 1 or 2, wherein the additive A comprises at least one of lithium bis(oxalato)borate or lithium difluoro(oxalato)borate.

4. The battery according to any one of claims 1 to 3, wherein the solvent comprises solvent B, the solvent B being a carboxylic acid ester solvent.

5. The battery according to claim 4, wherein a mass percentage content of the solvent B in the electrolyte solution is *b*, *b* ranging from 1% to 30%.

6. The battery according to claim 5, wherein *b* ranges from 5% to 15%.

7. The battery according to any one of claims 4 to 6, wherein the solvent B comprises at least one of methyl acetate, methyl propionate, ethyl acetate, ethyl propionate, propyl methanoate, propyl acetate, or propyl propionate.

8. The battery according to any one of claims 4 to 6, wherein the additive comprises additive C, the additive C being a nitrogen-containing heterocyclic substance.

9. The battery according to claim 8, wherein a mass percentage content of the additive C in the electrolyte solution is *c*, *c* ranging from 0.1% to 0.5%.

10. The battery according to claim 8 or 9, wherein the additive C comprises at least one of 2-fluoropyrazine, 2,5-difluoropyrazine, 2-fluoropyridazine, 3-fluoropyridazine, 2-fluoropyridine, 3-fluoropyridine, 4-fluoropyridine, 2,3-fluoropyridine, or 3,4-fluoropyridine.

11. The battery according to any one of claims 8 to 10, wherein:
the mass percentage content of the additive A in the electrolyte solution is *a*;
the mass percentage content of the solvent B in the electrolyte solution is *b*; and
the mass percentage content of the additive C in the electrolyte solution is c,
*z*, *a*, *b*, and c satisfying 0.25 ≤ (*a*+*c*)*(1-*b*)*100/*z* ≤ 2.15.

12. An energy storage device, comprising the battery according to any one of claims 1 to 11.
